# EUROPEAN PATENT APPLICATION

(11) **EP 3 712 571 A1**
(43) Date of publication of application: **23.09.2020**
(21) Application number: 19886075.1
(22) Date of filing: 01.02.2019
(51) Int. Cl.: G01F 1/66, H03K 5/08

(54) **SIGNAL PROCESSING CIRCUIT, RELATED CHIP, FLOWMETER, AND METHOD**

(71) Applicant: SHENZHEN GOODIX TECHNOLOGY CO., LTD., Shenzhen, Guangdong 518045 (CN)
(72) Inventor: CHANG, Jung-Yu, Shenzhen, Guangdong 518045 (CN); NG, Si Herng, Shenzhen, Guangdong 518045 (CN)
(74) Representative: Padial Martinez, Ana Belen
(86) International application number: PCT/CN2019/074369
(87) International publication number: WO 2020/155086

(57) **Abstract**

The present application discloses a signal processing circuit, configured to process a transducer output signal, wherein the transducer output signal is generated when the transducer is triggered by a transducer input signal at a first time point, and the signal processing circuit includes: a receiver, configured to receive the transducer output signal and convert the received transducer output signal into a receiving signal; and a signal truncating module (106), configured to divide the receiving signal into a first portion and a second portion, and generate a truncated receiving signal according to the first portion and the second portion of the receiving signal, the first portion and the second portion of the receiving signal continue and do not overlap in a time domain, and the truncated receiving signal also has a first portion and a second portion corresponding to the first portion and the second portion of the receiving signal. The present application further provides a related chip, a flow meter and a method.

## Description

### TECHNICAL FIELD

The present application relates to a signal processing circuit; in particular, to a signal processing circuit for preprocessing the transducer receiving signal, and a related chip, a flow meter and a method.

### BACKGROUND

The signal generated by the transducer may be distorted after passing through the channel; for example, a series of additional ripples may occur at the end of the signal; distorted signals often cause errors at the receiving end, and additional ripples at the end of the signal will increase the signal length; these are disadvantageous to signal processing at the receiving end. For example, both hardware costs and processing time will increase. In view of this, further improvements and innovations are needed to improve the above-mentioned issues.

### BRIEF SUMMARY OF THE INVENTION

One of the purposes of the present application is directed to a signal processing circuit for processing a transducer receiving signal and a related chip, a flow meter and a method to address the above-mentioned issues.

One embodiment of the present application discloses a signal processing circuit, which is configured to process the transducer output signal, wherein the transducer output signal is generated when a transducer is triggered by a transducer input signal at a first time point, wherein the signal processing circuit includes: a receiver, configured to receive the transducer output signal and convert the received transducer output signal into a receiving signal; and a signal truncating module, coupled to the receiver and configured to divide the receiving signal into a first portion and a second portion, and generate a truncated receiving signal according to the first portion and the second portion of the receiving signal, wherein the first portion and the second portion of the receiving signal continue and do not overlap in a time domain, and the truncated receiving signal also has a first portion and a second portion respectively corresponding to the first portion and the second portion of the receiving signal, wherein an amplitude of the first portion of the truncated receiving signal and an amplitude of the first portion of the receiving signal as a whole are in a fixed multiple relationship; an amplitude of the second portion of the truncated receiving signal and an amplitude of the second portion of the receiving signal as a whole are in a non-fixed multiple relationship, or the amplitude of the second portion of the truncated receiving signal is zero.

One embodiment of the present application discloses a chip, which includes the above-mentioned signal processing circuit.

One embodiment of the present application discloses a flow meter, which includes the above-mentioned signal processing circuit and the above-mentioned transducer; wherein the signal processing circuit is coupled to the above-mentioned transducer.

One embodiment of the present application discloses a signal processing method, which is configured to process a transducer output signal, wherein the transducer output signal is generated when a transducer is triggered by a transducer input signal at a first time point, wherein the signal processing method includes: receiving the transducer output signal and converting the received transducer output signal into a receiving signal; and dividing the receiving signal into a first portion and a second portion, and generating a truncated receiving signal according to the first portion and the second portion of the receiving signal, wherein the first portion and the second portion of the receiving signal continue do not overlap in a time domain, and the truncated receiving signal also has a first portion and a second portion respectively corresponding to the first portion and the second portion of the receiving signal, wherein an amplitude of the first portion of the truncated receiving signal and an amplitude of the first portion of the receiving signal as a whole are in a fixed multiple relationship; an amplitude of the second portion of the truncated receiving signal and an amplitude of the second portion of the receiving signal as a whole are in a non-fixed multiple relationship, or the amplitude of the second portion of the truncated receiving signal is zero.

The signal processing circuit for processing a transducer receiving signal and a related chip, a flow meter and a method according to the present application may decrease the length of the receiving signal, so as to reduce the cost of the hardware and processing time.

### BRIEF DESCRIPTION OF THE DRAWINGS

FIG. 1 shows the waveforms of an output signal that is generated correspondingly by the transducer triggered by an input signal in a time domain.
FIG. 2 is a schematic diagram illustrating a signal processing circuit according to embodiments of the present application.
FIG. 3 is a schematic diagram illustrating a signal truncating module according to embodiments of the present application.
FIG. 4 shows the waveforms of the first embodiment of the present signal truncating module generating a truncated receiving signal.
FIG. 5 is a flow diagram illustrating a signal truncating module generating a truncated receiving signal according to the first embodiment of the present application.
FIG. 6 shows the waveforms of the truncated receiving signal generated by the signal truncating module according to the first embodiment of the present application.
FIG. 7 shows the waveforms of the second embodiment of the present signal truncating module generating a truncated receiving signal to a receiving signal.
FIG. 8 is a flow diagram illustrating a signal truncating module generating a truncated receiving signal according to the second embodiment of the present application.
FIG. 9 shows the waveforms of the truncated receiving signal generated by the signal truncating module according to the second embodiment of the present application.
FIG. 10 is a schematic diagram illustrating a signal truncating module according to another embodiment of the present applications.
FIG. 11 shows the waveforms of the third embodiment of the present signal truncating module generating a truncated receiving signal.
FIG. 12 is a flow diagram illustrating a signal truncating module generating a truncated receiving signal according to the third embodiment of the present application.
FIG. 13 shows the waveforms of the truncated receiving signal generated by the signal truncating module according to the third embodiment of the present application.
FIG. 14 is a schematic diagram illustrating a signal processing circuit according to another embodiment of the present applications.

Reference numerals used is the drawings are summarized below:
- 100, 200: Signal processing circuit
- 102: Transducer
- 104: Receiver
- 106: Signal truncating module
- 1062: Profile capturing module
- 1064, 2064: Signal processing module
- 108: Cross-correlation calculation module
- 202-210, 302-312, 402-412: Step

### DETAILED DESCRIPTION

The following disclosure provides many different embodiments, or examples, for implementing different features of the application. Specific examples of components and arrangements are described below to simplify the present disclosure. These are, of course, merely examples and are not intended to be limiting. For example, the formation of a first feature over or on a second feature in the description that follows may include embodiments in which the first and the second features are formed in direct contact, and may also include embodiments in which additional features may be formed between the first and the second features, such that the first and the second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath, " "below, " "lower, " "above, " "upper" and the like, may be used herein for the ease of the description to describe one element or feature's relationship with respect to another element(s) or feature(s) as illustrated in the drawings. The spatially relative terms are intended to encompass different orientations of the device in use or operation in addition to the orientation depicted in the figures. The apparatus may be otherwise oriented (e.g., rotated by 90 degrees or at other orientations) and the spatially relative descriptors used herein may likewise be interpreted accordingly.

Notwithstanding that the numerical ranges and parameters setting forth the broad scope of the application are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. As could be appreciated, other than in the operating/working examples, or unless otherwise expressly specified, all of the numerical ranges, amounts, values and percentages such as those for quantities of materials, durations of times, temperatures, operating conditions, ratios of amounts, and the likes thereof disclosed herein should be understood as modified in all instances by the term "about." Accordingly, unless indicated to the contrary, the numerical parameters set forth in the present disclosure and attached claims are approximations that can vary as desired. At the very least, each numerical parameter should at least be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

The transducer is a component capable of transforming energy from one form into another form. These energy forms may include electric energy, mechanic energy, electromagnetic energy, solar energy, chemical energy, acoustic energy and thermal energy, etc.; however, the present application is not limited thereto, and the transducer may include any component capable of transforming energy.

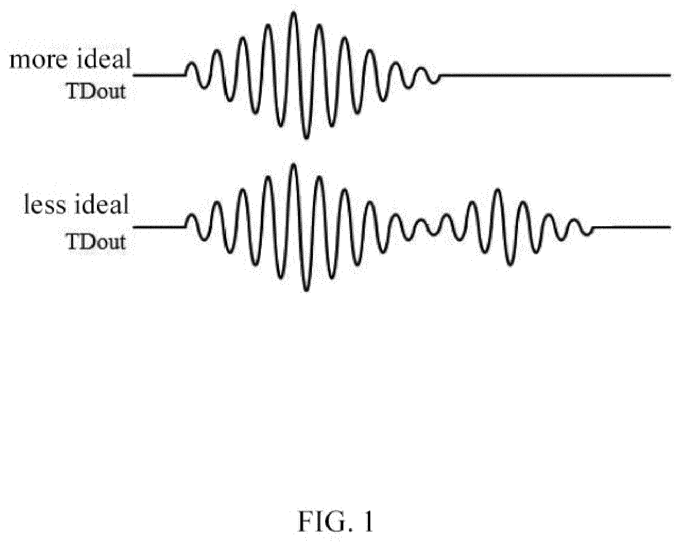

The transducer receives a transducer input signal TDin and generates a transducer output signal TDout correspondingly; the thus-generated transducer output signal TDout may have different level of distortion due to various reasons (such as, channel effect, residual energy of the transducer, etc.). Reference is made to FIG. 1. A more ideal transducer output signal TDout and a less ideal transducer output signal TDout are provided in FIG. 1. As could be seen in FIG. 1, the less ideal transducer output signal TDout is less concentrated across the time domain, thereby resulting in a longer overall length of the transducer output signal. Therefore, when carrying out subsequent signal processing, more data should be store with respect to such transducer output signal, which results in a burden to the amount of calculation and consumes more hardware and power.

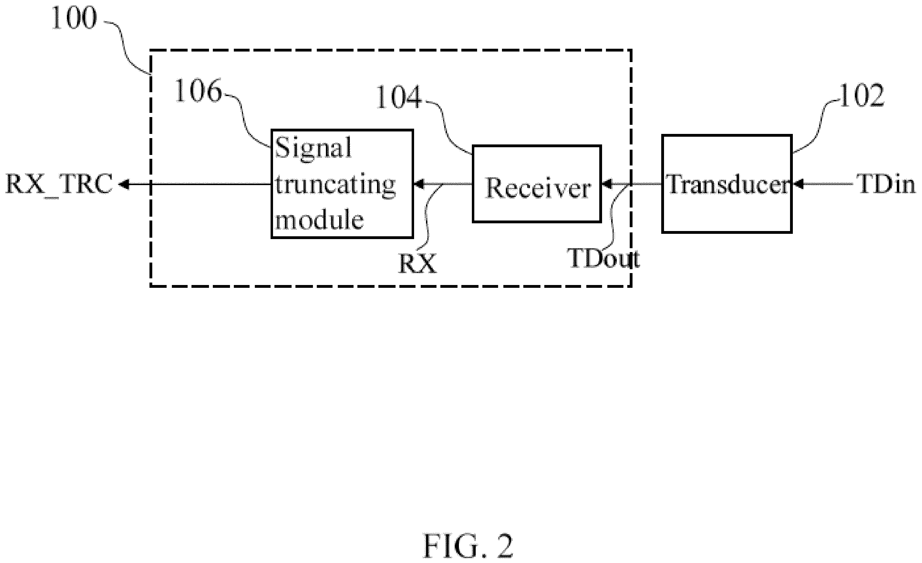

FIG. 2 is a schematic diagram illustrating a signal processing circuit 100 according to embodiments of the present application. The signal processing circuit 100 is configured to process the transducer output signal TDout, wherein the transducer output signal TDout is generated when the transducer 102 is triggered by the transducer input signal TDin at a first time point. The signal processing circuit 100 includes a receiver 104 and a signal truncating module 106. The receiver 104 is configured to receive the transducer output signal TDout and convert the received transducer output signal TDout into a receiving signal RXTDout. For example, the receiver 104 may include an analog-to-digital converter (A/D converter), which is configured to convert the transducer output signal TDout in an analogue form into the receiving signal RXTDout in a digital form. Also, the receiver 104 may include a low noise amplifier, which is configured to provide sufficient gain to amplify the transducer output signal TDout. The signal truncating module 106 is coupled to the receiver 104 and is configured to generate a truncated receiving signal RX_TRC according to the receiving signal RX. The signal truncating module 106 according to embodiments of the present application can divide the receiving signal RX into a first portion and a second portion, that are continue and do not overlap in a time domain, and then reserve the first portion of the receiving signal RX as much as possible, and decrease or eliminate the second portion of the receiving signal RX, so as to generate the truncated receiving signal.

The thus-generated truncated receiving signal RX_TRC also has a first portion and a second portion respectively corresponding to the first portion and the second portion of the receiving signal RX, the first portion and the second portion of the truncated receiving signal RX_TRC continue and do not overlap in a time domain. The time length of the first portion of the truncated receiving signal RX_TRC is the same as the time length of the first portion of the receiving signal RX; the time length of the second portion of the truncated receiving signal RX_TRC is the same as the time length of the second portion of the receiving signal RX. According to embodiments of the present application, the amplitude of the first portion of the truncated receiving signal RX_TRC is in a fixed multiple relationship with the amplitude of the first portion of the receiving signal RX; the amplitude of the second portion of the truncated receiving signal RX_TRC is in a non-fixed multiple relationship with amplitude of the second portion of the receiving signal RX, or the amplitude of the second portion of the truncated receiving signal RX_TRC is zero. It should be noted that in the present application, the term "the same" may refer to "substantially the same," and the term "fixed" may refer to "substantially fixed," meaning that values within an acceptable standard deviation are deemed "substantially the same" or "substantially fixed," and this applies to all the same descriptions hereinbelow.

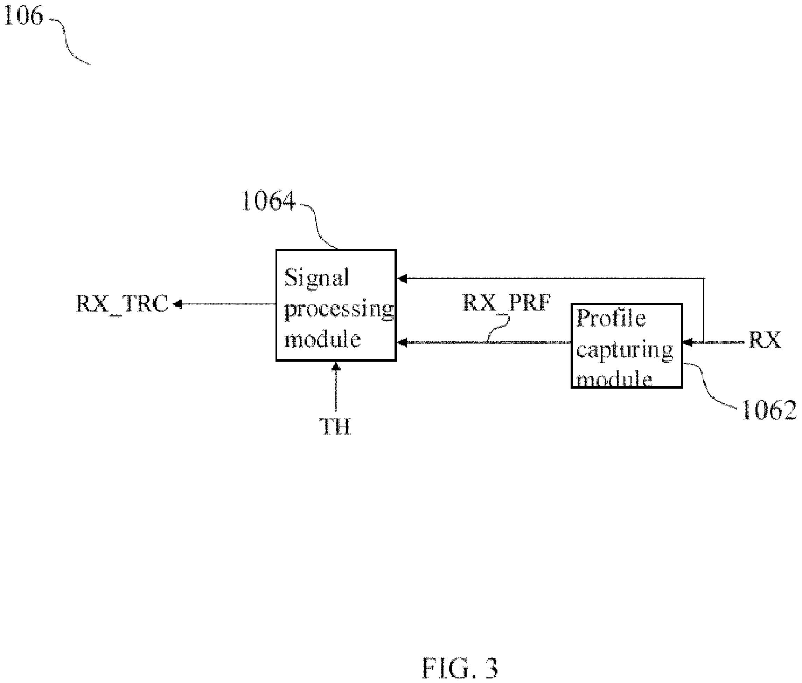

FIG. 3 is a schematic diagram illustrating a signal truncating module 106 according to embodiments of the present application. The signal truncating module 106 includes a profile capturing module 1062 and a signal processing module 1064. The profile capturing module 1062 is configured to generate a receiving signal profile RX_PRF of the receiving signal RX according to receiving signal RX. The signal processing module 1064 generates the truncated receiving signal RX_TRC according to the receiving signal RX, the receiving signal profile RX_PRF and a specific voltage TH. Various embodiments of the present signal processing module 1064 are discussed below in connection with drawings.

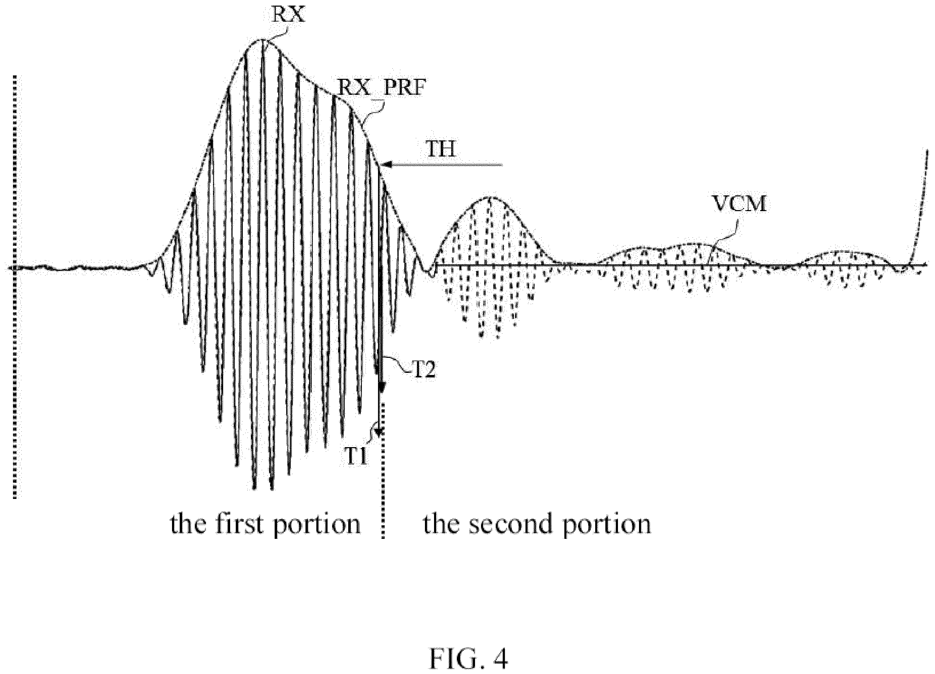

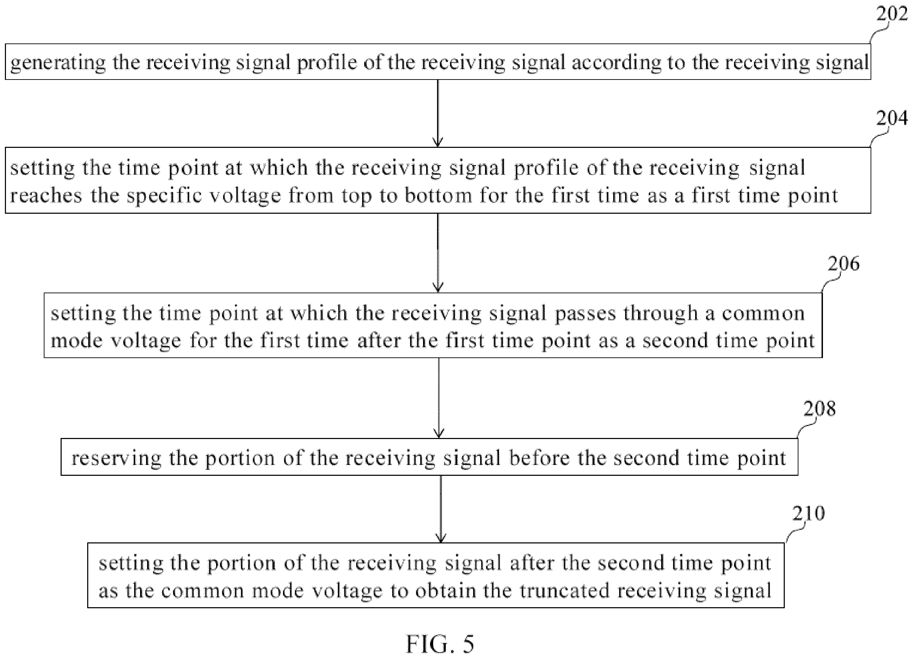

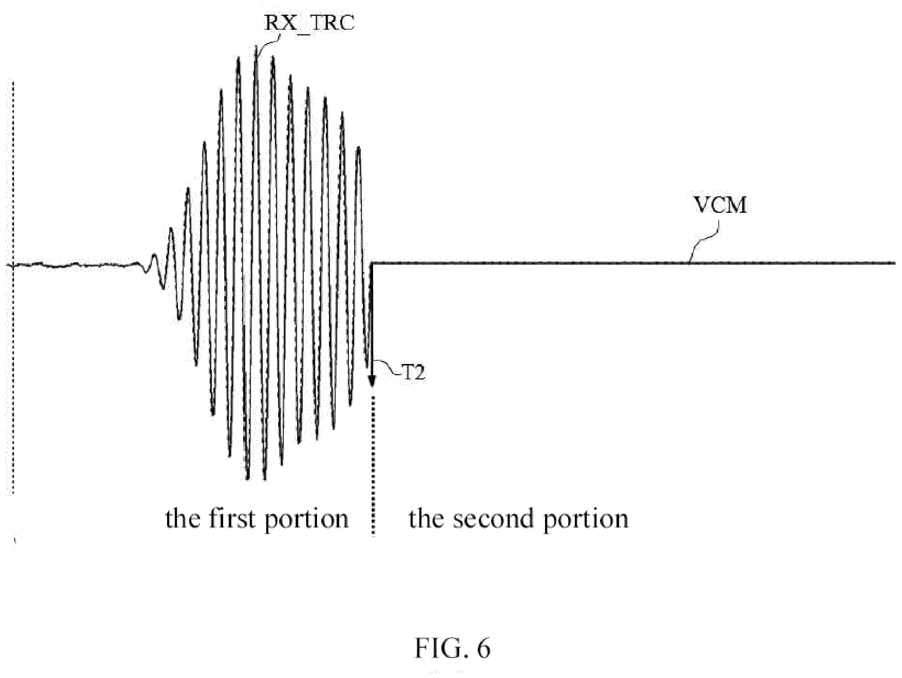

FIG. 4 and FIG. 6 show the waveforms of the truncated receiving signal RX_TRC generated by the signal truncating module 106 according to the first embodiment of the present application. FIG. 5 is a flow diagram illustrating Step 202 to Step 210 used by the signal truncating module 106 to generate the truncated receiving signal RX_TRC, according to the first embodiment of the present application. In Step 202, the profile capturing module 1062 in the signal truncating module 106 generates the receiving signal profile RX_PRF of the receiving signal RX according to the receiving signal RX. In Step 204 to Step 210, the signal processing module 1064 generates the truncated receiving signal RX_TRC according to the receiving signal RX, the receiving signal profile RX_PRF and the specific voltage TH.

Specifically, in Step 204, the signal processing module 1064 sets a time point at which the receiving signal profile RX_PRF of the receiving signal RX first downwardly reaches the specific voltage TH for the first time as a first time point T1, see, FIG. 4. Next, in Step 206, the signal processing module 1064 sets a time point at which the receiving signal RX passes through the common mode voltage VCM after the first time point T1 for the first time as a second time point T2, seem FIG. 4. Next, in Step 208 to Step 210, the signal processing module 1064 sets a portion of the receiving signal RX before the second time point T2 as the first portion and uses the first portion of the receiving signal RX as the first portion of the truncated receiving signal RX_TRC, and sets a portion of the receiving signal RX after the second time point T2 as the second portion and sets the second portion of the receiving signal RX as the common mode voltage VCM and uses the second portion of the receiving signal RX as the second portion of the truncated receiving signal RX_TRC.

In this embodiment, the amplitude of the first portion of the truncated receiving signal RX_TRC and the amplitude of the first portion of the receiving signal RX have a fixed multiple relationship of 1; however, the present application is not limited thereto, and the amplitude of the second portion of the truncated receiving signal RX_TRC and the amplitude of the second portion of the receiving signal RX have a multiple relationship that is not fixed (or, when the common mode voltage VCM equals 0V, the amplitude of the second portion of the truncated receiving signal RX_TRC is 0). In other words, the subsequent signal processing circuit may not have to store the data of the second portion of the receiving signal RX, thereby reducing the amount of calculation and power consumption of the hardware.

In some embodiments of the present application, it is also to modify Step 206; for example, the signal processing module 1064 sets a time point at which the receiving signal RX last time passes through the common mode voltage VCM before the first time point T1 for the most recent time as the second time point T2; alternatively, the signal processing module 1064 sets a time point at which the receiving signal RX passes through the common mode voltage VCM closest to the first time point T1 as the second time point T2.

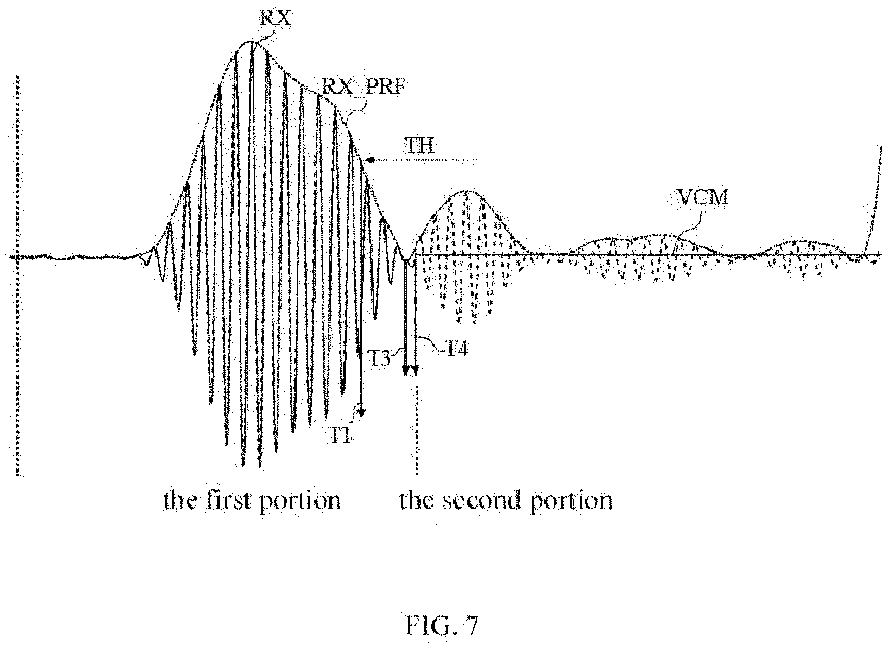

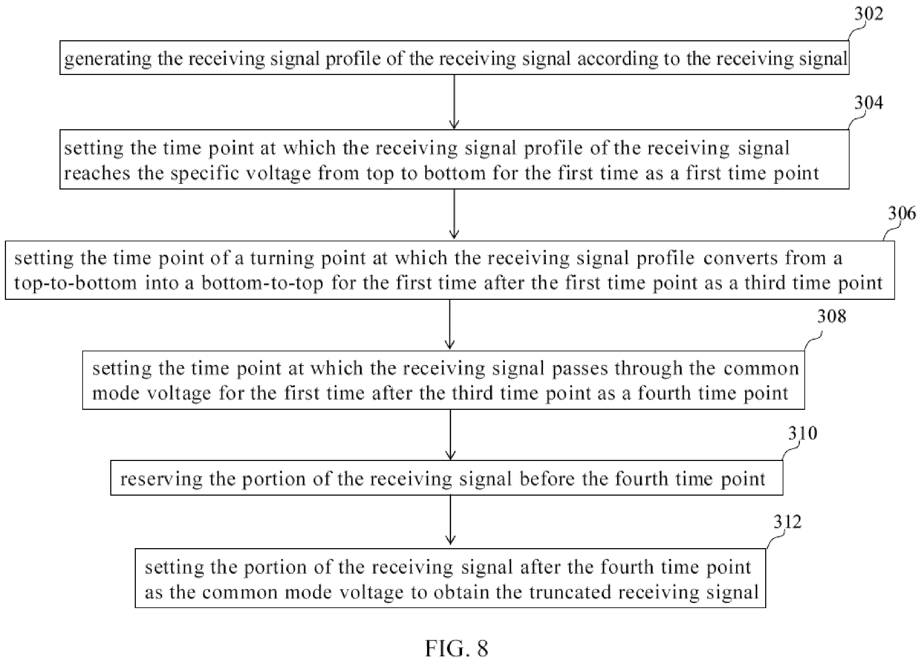

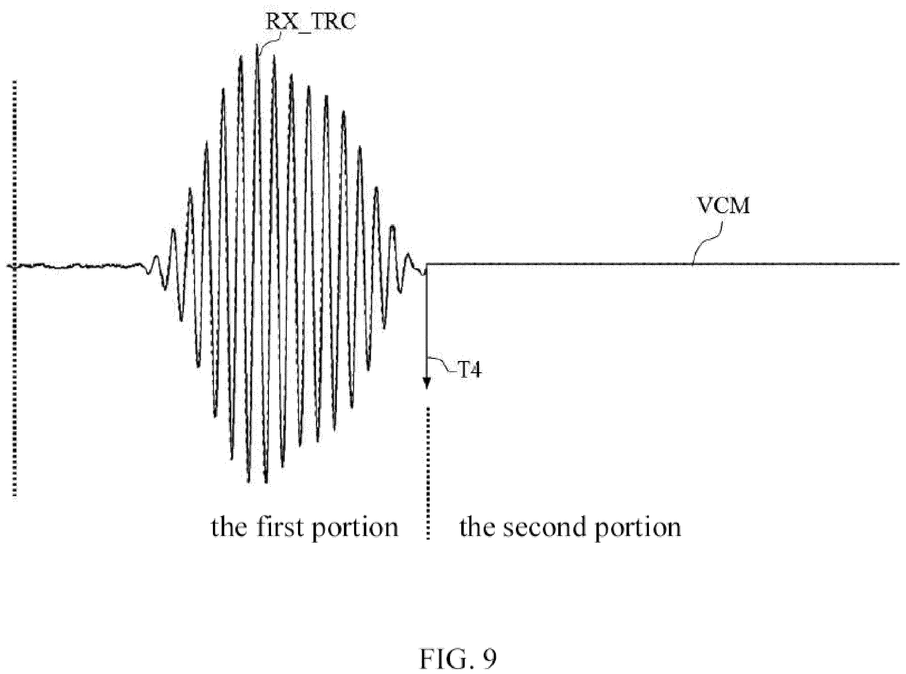

FIG. 7 and FIG. 9 show the waveforms of the truncated receiving signal RX_TRC generated by the signal truncating module 106 according to the second embodiment of the present application. FIG. 8 is a flow diagram illustrating Step 302 to Step 312 used by the signal truncating module 106 to generate the truncated receiving signal RX_TRC, according to the second embodiment of the present application. In Step 302, the profile capturing module 1062 in the signal truncating module 106 generates the receiving signal profile RX_PRF of the receiving signal RX according to the receiving signal RX. In Step 304 to Step 312, the signal processing module 1064 generates the truncated receiving signal RX_TRC according to the receiving signal RX, the receiving signal profile RX_PRF and the specific voltage TH.

Specifically, in Step 304, for one signal set, the signal processing module 1064 sets a time point at which the receiving signal profile RX_PRF of the receiving signal RX first downwardly reaches the specific voltage TH for the first time as a first time point T1 (similar to the first embodiment illustrated in FIG. 4 to FIG. 6), as shown in FIG. 7. Next, in Step 306, the signal processing module 1064 sets a time point of a turning point at which the receiving signal RX converts from a downward trend into an upward trend for the first time after the first time point T1 as a third time point T3, and in Step 308, the signal processing module 1064 sets a time point at which the receiving signal RX passes through the common mode voltage VCM for the first time after the third time point T3 as a fourth time point T4, as shown in Figure. In Step 310 to Step 312, the signal processing module 1064 sets a portion of the receiving signal RX before the fourth time point T4 as the first portion and uses the first portion of the receiving signal RX as the first portion of the truncated receiving signal RX_TRC, and sets a portion of the receiving signal RX after the fourth time point T4 as the second portion and sets the second portion of of the receiving signal RX as the common mode voltage VCM and uses the second portion of of the receiving signal RX as the second portion of the truncated receiving signal RX_TRC, so as to obtain the truncated receiving signal RX TRC shown in FIG. 9.

In this embodiment, the amplitude of the first portion of the truncated receiving signal RX_TRC and the amplitude of the first portion of the receiving signal RX have a fixed multiple relationship of 1; however, the present application is not limited thereto, and the amplitude of the second portion of the truncated receiving signal RX_TRC and the amplitude of the second portion of the receiving signal RX have a multiple relationship that is not fixed (or when the common mode voltage VCM equals 0V, the amplitude of the second portion of the receiving signal RX is 0). In other words, the subsequent signal processing circuit may not have to store the data of the second portion of the receiving signal RX, thereby reducing the amount of calculation and power consumption of the hardware.

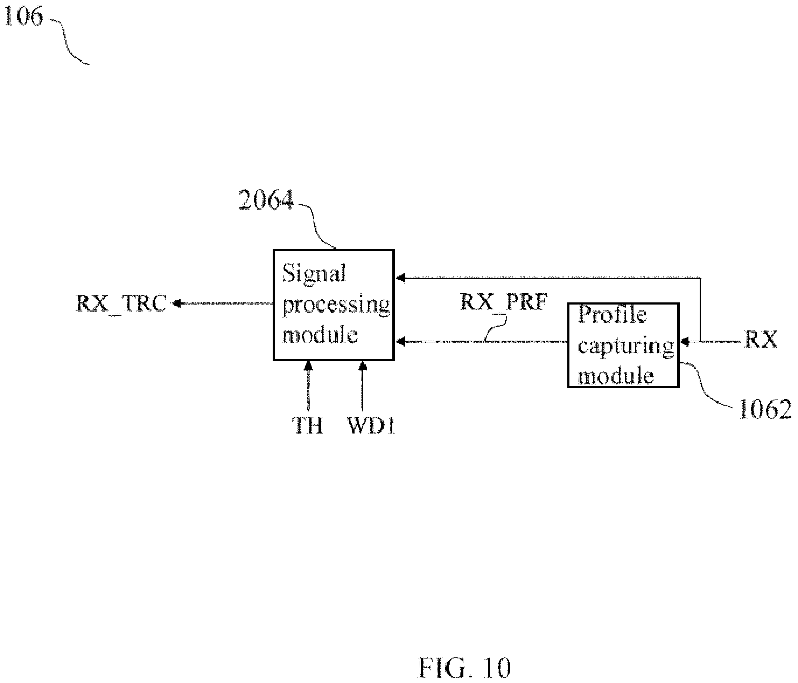

FIG. 10 is a schematic diagram illustrating a signal truncating module 106 according to another embodiment of the present application. The signal processing module 2064 in FIG. 10 differs from the signal truncating module 106 in FIG. 3 in that a truncated receiving signal RX_TRC is generated according to the receiving signal RX, the receiving signal profile RX_PRF, the specific voltage TH and a first specific window WD1. The present embodiment of the signal processing module 2064 is discussed below in connection with drawings.

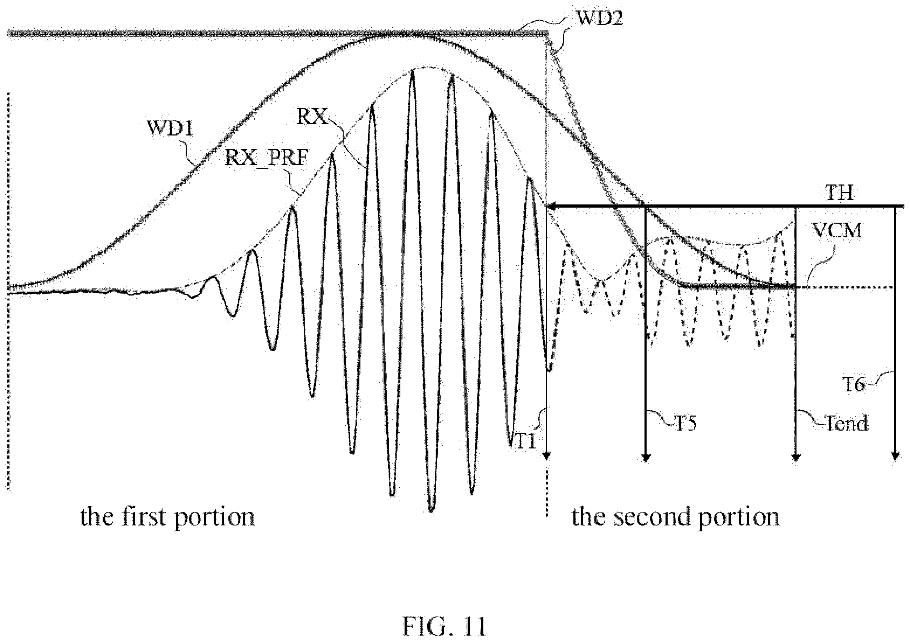

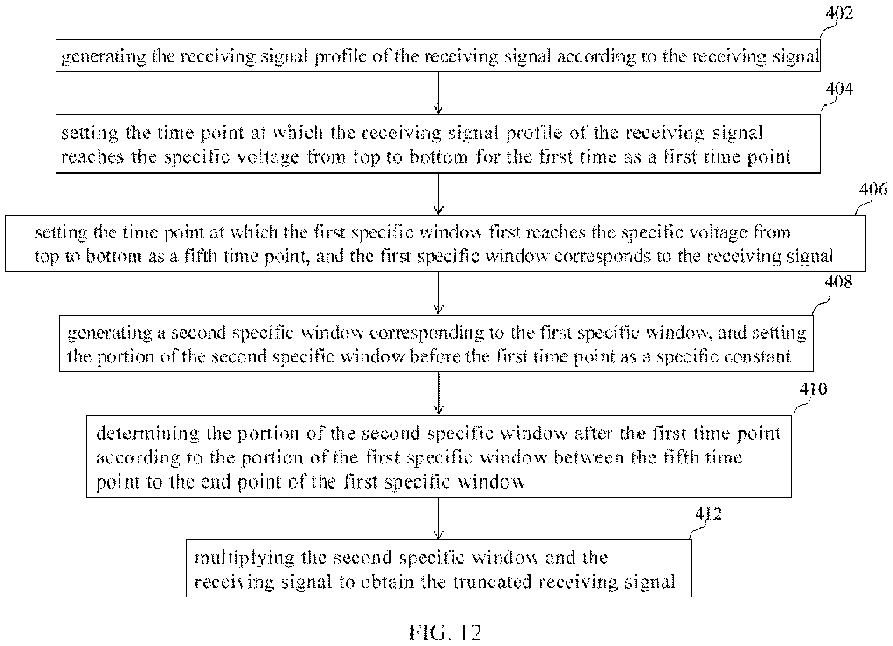

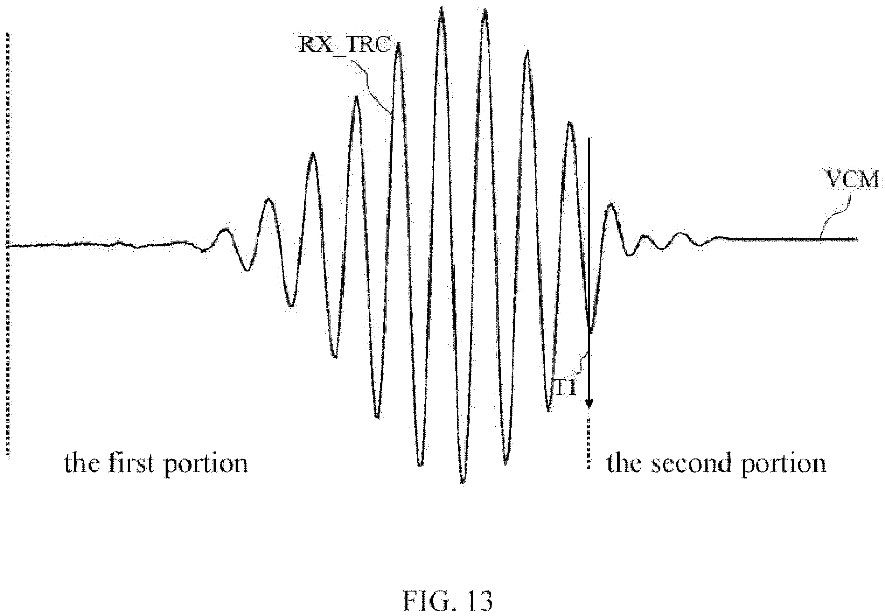

FIG. 11 and FIG. 13 show the waveforms of the truncated receiving signal RX_TRC generated by the signal truncating module 106 according to the third embodiment of the present application. FIG. 12 is a flow diagram illustrating Step 402 to Step 412 used by the signal truncating module 106 to generate the truncated receiving signal RX TRC, according to the third embodiment of the present application. In Step 402, the profile capturing module 1062 in the signal truncating module 106 generates the receiving signal profile RX_PRF of the receiving signal RX according to the receiving signal RX. In Step 404 to Step 412, the signal processing module 2064 generates the truncated receiving signal RX_TRC according to the receiving signal RX, the receiving signal profile RX_PRF, the specific voltage TH, and the first specific window WD1.

Specifically, the first specific window WD1 corresponds to the receiving signal RX, as shown in FIG. 11. The first specific window WD1 can be Hanning window, Blackman-Harris window, or any other window functions. In Step 404, for one signal set, the signal processing module 2064 sets a time point at which the receiving signal profile RX_PRF of the receiving signal RX first downwardly reaches the specific voltage TH for the first time as a first time point T1, as shown in FIG. 11. Next, in Step 406, the signal processing module 2064 sets a time point at which the first specific window first WD1 downwardly reaches the specific voltage TH as a fifth time point T5. Next, in Step 408, the signal processing module 2064 generates a second specific window WD2 corresponding to the first specific window WD1; in the present embodiment, the time length of the second specific window WD2 and the time length of the first specific window WD1 are the same. It should be noted that, in the present embodiment, the unit of the first specific window WD1 value is voltage, and although the second specific window WD2 is depicted in FIG. 11 together with the receiving signal RX and the first specific window WD1, the value of the second specific window WD2 is expressed as a ratio but not voltage, and the value of the second specific window WD2 before the first time point T1 is set as a first constant (in the present embodiment, the first constant is 1), whereas after the first time point T1, the value of the second specific window WD2 decreases from the first constant to a second constant (in the present embodiment, the second constant is 0).

In Step 410, the signal processing module 2064 also determines a portion of the second specific window WD2 after the first time point T1 according to the portion of the first specific window WD1 between the fifth time point T5 and the end time point Tend of the first specific window WD1. For example, the amplitude of the first specific window WD1 at the end time point Tend has converged to the common mode voltage VCM, and hence, the portion of the first specific window WD1 after the fifth time point T5 to the end time point Tend is set as the common mode voltage VCM, and it also extends to a sixth time point T6, so that the time length between the fifth time point T5 to the sixth time point T6 equals the time length between the first time point T1 to the end time point Tend. Therefore, the portion of the first specific window WD1 between the fifth time point T5 to the sixth time point T6 is used to linearly expand the portion of the second specific window WD2 between the first time point T1 to the end time point Tend. For example, the portion of the first specific window WD1 between the fifth time point T5 and the sixth time point T6 is divided by the specific voltage TH to obtain the portion of the second specific window WD2 between the first time point T1 and the end time point Tend.

In Step 412, the signal processing module 2064 multiplies the second specific window WD2 and the receiving signal RX to obtain the truncated receiving signal RX_TRC. In other words, the receiving signal RX before the first time point T1 is the first portion, and the receiving signal RX after the first time point T1 is the second portion. As could be seen in FIG. 13, the amplitude of the first portion of the truncated receiving signal RX_TRC and the amplitude of the receiving signal RX corresponding to the first portion have a fixed multiple relationship which equals to the first constant (in the present embodiment, 1), and the amplitude of the second portion of the truncated receiving signal RX_TRC and the amplitude of the second portion of the signal set corresponding to the receiving signal RX have a multiple relationship that is not fixed; i.e., it decreases from a first constant to a second constant (in the present embodiment, from 1 to 0), and hence, the amplitude of the second portion of the truncated receiving signal RX_TRC in FIG. 13 and the amplitude of the second portion of the receiving signal RX in FIG. 11 are not the same. In other words, the length of the truncated receiving signal RX_TRC to be processed by the signal processing circuit subsequently is shorter than the length of the receiving signal RX; in this way, there is no need to store the data of the whole receiving signal RX, thereby reducing the amount of calculation and power consumption of the hardware.

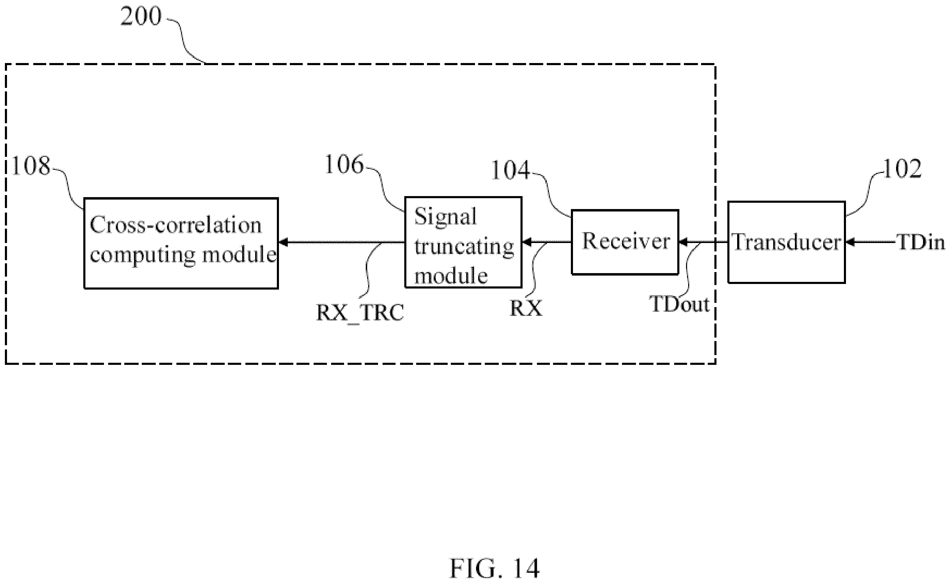

FIG. 14 is a schematic diagram illustrating a signal processing circuit 200 according to embodiments of the present application. The signal processing module 200 and differs from the signal processing module 100 in FIG. 2 in that the signal processing module 200 further includes a cross-correlation calculation module 108. For example, the cross-correlation calculation module 108 is configured to carry out the cross-correlation calculation on two truncated receiving signals RX_TRC generated from two receiving signals RX received at two different time points, so as to determine the time difference between the two receiving signals. For example, the transducer 102 generates a first transducer output signal TDout1 and a second transducer output signal TDout 2 at a first time point and a second time point respectively upon the trigger of a first transducer input signal TDin1 and a second transducer input signal TDin2; the receiver 104 receives the first transducer output signal TDout1 and the second transducer output signal TDout 2 and respectively converts the two into a first receiving signal RX1 and a second receiving signal RX2; and the signal truncating module 106 generates a first truncated receiving signal RX_TRC1 and a second truncated receiving signal RX_TRC2 according to the first receiving signal RX1 and the second receiving signal RX2, respectively. The cross-correlation calculation module 108 carries out the cross-correlation calculation on the first truncated receiving signal RX_TRC1 and the second truncated receiving signal RX_TRC2, so as to determine a time difference between the first time point and the second time point.

The present application also provides a chip, which includes the signal processing circuit 100 or the signal processing circuit 200. In some embodiments, the signal processing circuit 100/200 is applicable in a transducer device; for example, the present application also provides a flow meter, which includes the signal processing circuit 100/200 and a transducer 102. For example, the above-mentioned flow meter can be used to detect the flow velocity and/or flow volume of rate and liquid; however, the present application is not limited thereto.

The foregoing outlines features of several embodiments so that those skilled in the art may better understand various aspects of the present disclosure. Those skilled in the art should appreciate that they may readily use the present disclosure as a basis for designing or modifying other processes and structures for carrying out the same purposes and/or achieving the same advantages of embodiments introduced herein. Those skilled in the art should also realize that such equivalent embodiments still fall within the spirit and scope of the present disclosure, and they may make various changes, substitutions, and alterations thereto without departing from the spirit and scope of the present disclosure.

## Claims

1. A signal processing circuit, configured to process a transducer output signal, wherein the transducer output signal is generated when a transducer is triggered by a transducer input signal at a first time point, **characterized in that** the signal processing circuit comprises:
a receiver, configured to receive the transducer output signal and convert the received transducer output signal into a receiving signal; and
a signal truncating module, coupled to the receiver and configured to divide the receiving signal into a first portion and a second portion, and generate a truncated receiving signal according to the first portion and the second portion of the receiving signal, wherein the first portion and the second portion of the receiving signal continue and do not overlap in a time domain, and the truncated receiving signal also has a first portion and a second portion respectively corresponding to the first portion and the second portion of the receiving signal, wherein an amplitude of the first portion of the truncated receiving signal and an amplitude of the first portion of the receiving signal as a whole are in a fixed multiple relationship; an amplitude of the second portion of the truncated receiving signal and an amplitude of the second portion of the receiving signal as a whole are in a non-fixed multiple relationship, or the amplitude of the second portion of the truncated receiving signal is zero.

2. The signal processing circuit of claim 1, **characterized in that** a time length of the first portion of the truncated receiving signal and a time length of the first portion of the receiving signal are the same; and a time length of the second portion of the truncated receiving signal and a time length of the second portion of the receiving signal are the same.

3. The signal processing circuit of claim 1, **characterized in that** the signal truncating module comprises:
a profile capturing module, configured to generate a receiving signal profile of the receiving signal according to the receiving signal; and
a signal processing module, configured to generate the truncated receiving signal according to the receiving signal and the receiving signal profile.

4. The signal processing circuit of claim 3, **characterized in that** the signal processing module further generates the truncated receiving signal according to a specific voltage.

5. The signal processing circuit of claim 4, **characterized in that** the signal processing module sets a time point at which the receiving signal profile of the receiving signal downwardly reaches the specific voltage for the first time as a first time point, sets a time point at which the receiving signal passes through a common mode voltage for the first time after the first time point as a second time point, sets a portion of the receiving signal before the second time point as the first portion and uses the first portion of the receiving signal as the first portion of the truncated receiving signal, and sets a portion of the receiving signal after the second time point as the second portion and sets the second portion of the receiving signal as the common mode voltage and uses the second portion of the receiving signal as the second portion of the truncated receiving signal.

6. The signal processing circuit of claim 4, **characterized in that** the signal processing module sets a time point at which the receiving signal profile of the receiving signal downwardly reaches the specific voltage for the first time as a first time point, sets a time point at which the receiving signal last time passes through a common mode voltage before the first time point as a second time point, sets a portion of the receiving signal before the second time point as the first portion and uses the first portion of the receiving signal as the first portion of the truncated receiving signal, and sets a portion of the receiving signal after the second time point as the second portion and sets the second portion of of the receiving signal as the common mode voltage and uses the second portion of of the receiving signal as the second portion of the truncated receiving signal.

7. The signal processing circuit of claim 4, **characterized in that** the signal processing module sets a time point at which the receiving signal profile of the receiving signal downwardly reaches the specific voltage for the first time as a first time point, sets a time point at which the receiving signal passes through a common mode voltage closest to the first time point as a second time point, sets a portion of the receiving signal before the second time point as the first portion and uses the first portion of the receiving signal as the first portion of the truncated receiving signal, and sets a portion of the receiving signal after the second time point as a second portion and sets the second portion of of the receiving signal as the common mode voltage and uses the second portion of of the receiving signal as the second portion of the truncated receiving signal.

8. The signal processing circuit of claim 4, **characterized in that** the signal processing module sets a time point at which the receiving signal profile of the receiving signal downwardly reaches the specific voltage for the first time as a first time point, sets a time point of a turning point at which the receiving signal profile converts from a downward trend into an upward trend for the first time after the first time point as a third time point, sets a time point at which the receiving signal passes through a common mode voltage for the first time after the third time point as a fourth time point, sets a portion of the receiving signal before the fourth time point as the first portion and uses the first portion of the receiving signal as the first portion of the truncated receiving signal, and sets a portion of the receiving signal after the fourth time point as the second portion and sets the second portion of of the receiving signal as a value of the common mode voltage and uses the second portion of of the receiving signal as the second portion of the truncated receiving signal.

9. The signal processing circuit of claim 4, **characterized in that** the signal processing module further generates the truncated receiving signal according to a first specific window, and the first specific window corresponds to the receiving signal.

10. The signal processing circuit of claim 9, **characterized in that** the signal processing module sets a time point at which the receiving signal profile of the receiving signal downwardly reaches the specific voltage for the first time as a first time point, sets a time point at which the first specific window first downwardly reaches the specific voltage as a fifth time point, and the signal processing module generates a second specific window corresponding to the first specific window, sets a portion of the second specific window before the first time point as a specific constant, determines a portion of the second specific window after the first time point according to the portion of the first specific window between the fifth time point to the end point of the first specific window, and multiplies the second specific window and the receiving signal to obtain the truncated receiving signal, wherein the portion of the receiving signal before the first time point is the first portion and the portion of the receiving signal after the first time point is the second portion.

11. The signal processing circuit of claim 1, **characterized in that** the transducer is triggered by another transducer input signal at a second time point different from the first time point to generate another transducer output signal, the receiver receives said another transducer output signal to generate another receiving signal, and the signal truncating module generates another truncated signal according to said another receiving signal, wherein the signal processing module further comprises:
a cross-correlation calculation module, configured to perform a cross-correlation calculation on the truncated signal and said another truncated signal.

12. A chip, **characterized by** comprising:
the signal processing circuit according to any of claims 1-11.

13. A flow meter, **characterized by** comprising:
the signal processing circuit according to any of claims 1-11; and
the transducer;
wherein the signal processing circuit is coupled to the transducer.

14. A signal processing method, configured to process a transducer output signal, wherein the transducer output signal is generated when a transducer is triggered by a transducer input signal at a first time point, **characterized in that** the signal processing method comprises:
receiving the transducer output signal and converting the received transducer output signal into a receiving signal; and
dividing the receiving signal into a first portion and a second portion, and generating a truncated receiving signal according to the first portion and the second portion of the receiving signal, wherein the first portion and the second portion of the receiving signal continue do not overlap in a time domain, and the truncated receiving signal also has a first portion and a second portion respectively corresponding to the first portion and the second portion of the receiving signal, wherein an amplitude of the first portion of the truncated receiving signal and an amplitude of the first portion of the receiving signal as a whole are in a fixed multiple relationship; an amplitude of the second portion of the truncated receiving signal and an amplitude of the second portion of the receiving signal as a whole are in a non-fixed multiple relationship, or the amplitude of the second portion of the truncated receiving signal is zero.

15. The signal processing method of claim 14, **characterized in that** the step of generating the truncated receiving signal comprises:
generating the receiving signal profile of the receiving signal according to the receiving signal; and
generating the truncated receiving signal according to the receiving signal and the receiving signal profile.

16. The signal processing method of claim 15, **characterized in that** the step of generating the truncated receiving signal further comprises generating the truncated receiving signal according to a specific voltage.

17. The signal processing method of claim 16, **characterized in that** the step of generating the truncated receiving signal comprises:
setting a time point at which the receiving signal profile of the receiving signal downwardly reaches the specific voltage for the first time as a first time point;
setting a time point at which the receiving signal passes through a common mode voltage for the first time after the first time point as a second time point;
setting a portion of the receiving signal before the second time point as the first portion and uses the first portion of the receiving signal as the first portion of the truncated receiving signal; and
setting a portion of the receiving signal after the second time point as the second portion and sets the second portion of the receiving signal as the common mode voltage and uses the second portion of the receiving signal as the second portion of the truncated receiving signal.

18. The signal processing method of claim 16, **characterized in that** the step of generating the truncated receiving signal comprises:
setting a time point at which the receiving signal profile of the receiving signal downwardly reaches the specific voltage for the first time as a first time point;
setting a time point of a turning point at which the receiving signal profile converts from a downward trend into an upward trend for the first time after the first time point as a third time point;
setting a time point at which the receiving signal passes through a common mode voltage for the first time after the third time point as a fourth time point;
setting a portion of the receiving signal before the fourth time point as the first portion and uses the first portion of the receiving signal as the first portion of the truncated receiving signal; and
setting a portion of the receiving signal after the fourth time point as the second portion and sets the second portion of of the receiving signal as a value of the common mode voltage and uses the second portion of of the receiving signal as the second portion of the truncated receiving signal.

19. The signal processing method of claim 16, **characterized in that** the step of generating the truncated receiving signal further comprises generating the truncated receiving signal according to a first specific window, wherein the first specific window corresponds to the receiving signal.

20. The signal processing method of claim 19, **characterized in that** the step of generating the truncated receiving signal comprises:
setting a time point at which the receiving signal profile of the receiving signal downwardly reaches the specific voltage for the first time as a first time point;
setting a time point at which the first specific window first downwardly reaches the specific voltage as a fifth time point;
generating a second specific window corresponding to the first specific window, and setting a portion of the second specific window before the first time point as a specific constant;
determining a portion of the second specific window after the first time point according to the portion of the first specific window between the fifth time point to the end point of the first specific window; and
multiplying the second specific window and the receiving signal to obtain the truncated receiving signal, wherein the portion of the receiving signal before the first time point is the first portion and the portion of the receiving signal after the first time point is the second portion.

21. The signal processing method of claim 14, **characterized in that** the transducer is triggered by another transducer input signal at a second time point different from the first time point to generate another transducer output signal, wherein the signal processing method further comprises:
receiving said another transducer output signal to generate another receiving signal;
generating another truncated signal according to said another receiving signal; and
performing a cross-correlation calculation on the truncated signal and said another truncated signal.
